# EUROPEAN PATENT SPECIFICATION

(11) **EP 1 162 396 B1**
(45) Date of publication and mention of the grant of the patent: **14.12.2005**
(21) Application number: 01610059.6
(22) Date of filing: 07.06.2001
(51) Int. Cl.: F16L 11/10, F16L 33/207

(54) **Hose pipe**
Schlauch
Tuyau souple

(30) Priority: 07.06.2000 DK 200000883
(43) Date of publication of application: 12.12.2001
(73) Proprietor: Codan Gummi A/S, 4600 Koge (DK)
(72) Inventor: Sjostrom, Tom, c/o Codan gummi A/S, 4600 Koge (DK)
(74) Representative: Larsen, Hans Ole

(56) References cited:
- EP-A- 0 427 682
- EP-A- 0 748 972
- EP-A- 0 999 395
- GB-A- 777 668
- US-A- 4 369 992

## Description

### State of the art

The invention concerns a hose pipe especially for use at high pressures, said hose pipe consisting of an inner hose, a metal barrier layer and a protection layer.

Hose pipes of this kind are used for many purposes where there is need for a diffusion-proof transport of liquids or vapours under pressure, as shown in EP 0 748 972 A1 and EP 0 999 395 A2, for example.

Where there is additional need for a hose pipe which shall be able to absorb high pressure, and which at the same time must be suitably flexible, the layers must be made relatively thick, and the protection layer in particular must be dimensioned to be able to withstand the great influences.

In order to ensure a good coherence of the layers forming part of the laminate, these are normally adhered to each other, but where pressures of up to 1500 bar prevail, the layers must be dimensioned in a relatively strong manner. The result is that the hose pipe becomes heavy, and also that it is not as flexible as desired.

### The object of the invention

It is the object of the invention to alleviate these drawbacks and limitations of the known hoses. According to the invention, this is achieved by the features of claim 1.

In a simple manner there is hereby achieved a protection layer which can not only absorb high pressures without the layer having to be of extra great thickness, but which also has a high degree of flexibility while at the same time affording optimum protection of the hose.

The protection layer is namely able to hold together on the laminate so that there is no need for the layers to be adhered to each other. The hose hereby retains a suitable flexibility, and will easily be able to be formed in accordance with the conditions.

By further tightening of the weave, the steel wires will go down into and deform the underlying soft layer. This results in a particularly effective firmness of the laminate.

By tightening the steel wire weave around the yielding protection layer, the deformation will be extended completely into the metal layer, whereby the coherence of the layers becomes so effective that the need for any form of adhesive is eliminated.

By mounting a coupling or connection piece on the end of the hose, and securing the bush which must accommodate the hose by configuring internal projections which can be pressed into the steel weave, both a tight and secure mounting is achieved.

By configuring the projections in the manner of screw threads, they will easily allow themselves to be pressed down in the weave along the full length of the bush.

By configuring the projections in an annular manner, a good cohesiveness is achieved.

Finally it is expedient to let the pressing-in be of varying extent, whereby maximum cohesiveness is achieved with the least possible risk of damage to the wires.

### The drawing

In the following, an example embodiment of the invention will be described in more detail with reference to the drawing, where
- fig. 1: shows a hose pipe partly in section,
- fig. 2: shows an enlarged section through the pipe, and
- fig. 3: shows a bush mounted on the pipe which is shown in section after the fastening.

### Description of an example embodiment

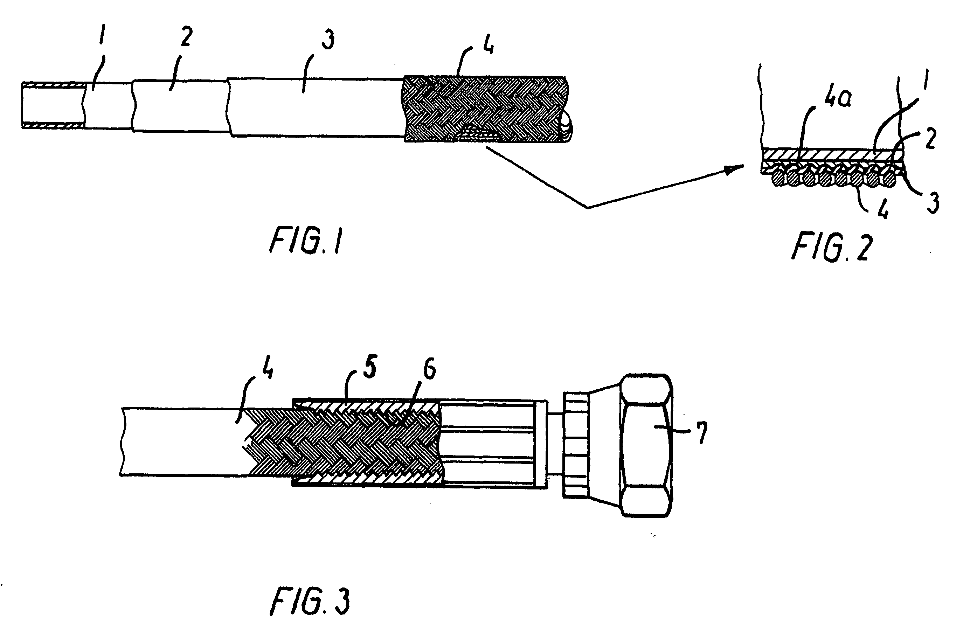

As shown in fig. 1, which illustrates a preferred embodiment of the invention, the hose pipe comprises an inner hose 1.

This is made of PFA or ETFE or corresponding material with a wall thickness of e.g. 0.8 mm.

Around this hose 1 there is wound or folded an aluminium foil 2 with overlapping in the formation of a barrier layer which is diffusion-proof.

Hereafter, a protection layer 3 is applied consisting of PTFE or corresponding material such as rubber with a wall thickness of e.g. 0.4 mm.

Finally, the protection layer is surrounded by a weave 4 of steel wire.

This is woven so suitably tight that the wires, as indicated in fig. 2, are pressed down into the yielding protection layer 3 which, as indicated at 4a, is herewith partly deformed, whereby a kind of engagement in the barrier layer 2 is achieved.

In a surprisingly simple manner, there is hereby achieved a hose pipe with a laminate which is suitably cohesive, so that the use of adhesive between the layers can possibly be completely avoided, and which at the same time gives the hose a suitable flexibility.

A hose pipe of this kind can resist high pressures up to 1500 bar and still retain its flexibility.

It is suitably noise-reducing and can easily be fashioned in accordance with the conditions.

The surrounding steel weave 4 provides the further possibility that the bush 5, as shown in fig. 3, can be mounted in a simple and secure manner.

The bush 5 of steel is configured internally with projections 6, which can either be wedge-shaped rings or possibly in the form of screw threads, where the projections can have the same or different inside diameters.

The object herewith is to ensure the holding together of the bush 5,6 with the hose at high pressures, and which at the same time can withstand the tensile strain to which the hose is exposed.

The mounting of the bush 5, which consists of a compression of the bush around the hose, will result in the projections 6 being pressed down into the steel weave 4, so that there is hereby achieved an effective engagement which can absorb the tensile strains.

On the bush 5 there can be coupled a union 7 or the like for use in the connection of the hose.

## Claims

1. Hose pipe, especially for use at high pressures, said hose comprising an inner hose (1), a metal barrier layer (2) and an outer protection layer (3), the outer protection layer (3) consisting of a plastic/rubber layer (3) which is provided externally with a surrounding weave of steel wire (4) **characterised in that** the surrounding weave of steel wire (4) is applied so that it is forced partly down into the plastic/rubber layer (3) to bring about a deformation of the plastic/rubber layer (3) for clamping around the metal barrier layer (2).

2. Hose pipe according to claim 1, **characterized in that** the wall thickness of the protection layer (3) is thinner than the wall thickness of the inner hose (1).

3. Hose pipe according to claims 1 and 2, **characterized in that** the inner hose (1) is made of PFA, or ETFE or a similar material.

4. Hose pipe according to any of the foregoing claims, **characterized in that** the barrier layer (2) consists of an aluminium foil.

5. Hose pipe according to any of the foregoing claims, where the hose is provided with a coupling piece or connection piece for mounting, and which comprises a metal bush (5) which is secured to the end of the hose pipe, **characterized in that** the bush (5) is provided with internally-extending projections (6) which upon fastening of the bush are pressed down into the surrounding steel weave (4).

6. Hose pipe according to claim 5, **characterized in that** the projections (6) extend as screw threads.

7. Hose pipe according to claim 5, **characterized in that** the projections (6) comprise one or more projections which extend in an annular manner.

8. Hose pipe according to claims 6 and 7, **characterized in that** the projections (6) have varying inside diameters.

## Patentansprüche

1. Schlauchleitung, insbesondere zur Anwendung bei hohen Drücken, die einen inneren Schlauch (1), eine Metall-Sperrschicht (2) und eine äußere Schutzschicht (3) aufweist, wobei die äußere Schutzschicht (3) eine Kunststoff-/Gummischicht (3) enthält, die außen mit einem umgebenden Gewebe aus Stahldraht (4) versehen ist, **dadurch gekennzeichnet, dass** das umgebende Gewebe aus Stahldraht (4) derart angebracht ist, dass es teilweise in die Kunststoff-/Gummischicht (3) niedergedrückt ist, um eine Verformung der Kunststoff-/Gummischicht (3) zum Klemmen um die Metallsperrschicht (2) herum herbeizuführen.

2. Schlauchleitung nach Anspruch 1, **dadurch gekennzeichnet, dass** die Wanddicke der Schutzschicht (3) dünner als die Wanddicke des inneren Schlauches (1) ist.

3. Schlauchleitung nach Ansprüchen 1 und 2, **dadurch gekennzeichnet, dass** der innere Schlauch (1) aus PFA oder ETFE oder einem vergleichbaren Material hergestellt ist.

4. Schlauchleitung nach einem der vorstehenden Ansprüche, **dadurch gekennzeichnet, dass** die Sperrschicht (2) eine Aluminiumfolie enthält.

5. Schlauchleitung nach einem der vorstehenden Ansprüche, bei der der Schlauch mit einem Kupplungsstück oder Verbindungsstück zum Befestigen versehen ist, und die eine Metallhülse (5) aufweist, die an dem Ende der Schlauchleitung gesichert ist, **dadurch gekennzeichnet, dass** die Hülse mit nach innen hervorstehenden Vorsprüngen (6) versehen ist, die beim Befestigen der Hülse in das umgebende Stahlgewebe (4) niedergedrückt werden.

6. Schlauchleitung nach Anspruch 5, **dadurch gekennzeichnet, dass** die Vorsprünge (6) sich als Schraubengewinde erstrecken.

7. Schlauchleitung nach Anspruch 5, **dadurch gekennzeichnet, dass** die Vorsprünge (6) einen oder mehrere Vorsprünge aufweisen, die sich ringweise erstrecken.

8. Schlauchleitung nach Ansprüchen 6 und 7, **dadurch gekennzeichnet, dass** die Vorsprünge (6) variierende Innendurchmesser aufweisen.

## Revendications

1. Tuyau souple, destiné particulièrement à être utilisé à hautes pressions, ledit tuyau souple comprenant un tuyau intérieur (1), une couche barrière métallique (2) et une couche de protection extérieure, la couche de protection extérieure étant constituée d'une couche de matière plastique/caoutchouc (3) qui est pourvue extérieurement d'une armure périphérique de fil d'acier (4), **caractérisé en ce que** l'armure périphérique de fil d'acier (4) est appliquée de telle sorte qu'elle est refoulée en partie dans la couche de matière plastique/caoutchouc (3) pour provoquer une déformation de la couche de matière plastique/caoutchouc (3) pour serrage autour de la couche barrière métallique (2).

2. Tuyau souple selon la revendication 1, **caractérisé en ce que** l'épaisseur de paroi de la couche de protection (3) est plus mince que l'épaisseur de paroi du tuyau intérieur (1).

3. Tuyau souple selon les revendications 1 et 2, **caractérisé en ce que** le tuyau intérieur (1) est fait de PFA, ou ETFE ou un matériau similaire.

4. Tuyau souple selon l'une quelconque des revendications précédentes, **caractérisé en ce que** la couche barrière (2) est constituée d'une feuille d'aluminium.

5. Tuyau souple selon l'une quelconque des revendications précédentes, où le tuyau souple est pourvu d'une pièce d'accouplement ou pièce de raccord pour le montage, et qui comprend une douille métallique (5) qui est fixée à l'extrémité du tuyau souple, **caractérisé en ce que** la douille (5) est pourvue de saillies s'étendant intérieurement (6) qui lors de la fixation de la douille sont imprimées dans l'armure d'acier périphérique (4).

6. Tuyau souple selon la revendication 5, **caractérisé en ce que** les saillies (6) s'étendent en tant que filets de vis.

7. Tuyau souple selon la revendication 5, **caractérisé en ce que** les saillies (6) comprennent une ou plusieurs saillies qui s'étendent de manière annulaire.

8. Tuyau souple selon les revendications 6 et 7, **caractérisé en ce que** les saillies (6) ont des diamètres intérieurs variables.
